# EUROPÄISCHE PATENTANMELDUNG

(11) **EP 1 785 246 A1**
(43) Veröffentlichungstag der Anmeldung: **16.05.2007**
(21) Anmeldenummer: 05028679.8
(22) Anmeldetag: 29.12.2005
(51) Int. Cl.: B28C 5/02, C04B 40/02, B28C 7/12

(54) **Verfahren zum Einspeisen von Kohlendioxid in Anmachwasser für Spritzbeton**

(30) Priorität: 10.11.2005 DE 102005053730
(71) Anmelder: Linde Aktiengesellschaft, 65189 Wiesbaden (DE)
(72) Erfinder: Buinger, Alexander, 81476 München (DE); Kimbacher, Alfred, 4591 Molln (AT); Rebhan, Dieter, 82538 Geretsried-Gelting (DE); Schmand, Ralf, 85716 Unterschleißheim (DE); Werthmann, Eckart, 6423 Mötz (AT)
(74) Vertreter: Zahn, Christoph

(57) **Zusammenfassung**

Die Erfindung betrifft ein Verfahren zum Trocken- oder Feuchtspritzen von Spritzbeton, wobei Zement und Anmachwasser einer Spritzdüse zugeführt und gemischt werden und der entstehende Spritzbeton verspritzt wird, wobei dem Anmachwasser Kohlendioxid zugesetzt wird und der Druck des Anmachwassers stromaufwärts der Spritzdüse mittels einer Hochdruckpumpe auf einen Enddruck erhöht wird. Erfindungsgemäß wird der Druck des Anmachwassers zunächst auf einen Zwischendruck erhöht wird, dann dem Anmachwasser das Kohlendioxid zugesetzt wird und schließlich der Druck des Anmachwassers auf den Enddruck erhöht wird.

## Beschreibung

Die Erfindung betrifft ein Verfahren zum Trocken- oder Feuchtspritzen eines zementhaltigen Stoffes, insbesondere von Spritzbeton, wobei Zement und Anmachwasser einer Spritzdüse zugeführt und gemischt werden und der entstehende Spritzbeton verspritzt wird, wobei dem Anmachwässer Kohlendioxid zugesetzt wird und der Druck des Anmachwassers stromaufwärts der Spritzdüse mittels einer Hochdruckpumpe auf einen Enddruck erhöht wird. Ferner bezieht sich die Erfindung auf eine Vorrichtung zum Trockenspritzen eines zementhaltigen Stoffes, insbesondere von Spritzbeton, mit einer Spritzdüse, an die eine Zufuhreinrichtung für Zement und eine Zufuhrleitung für Anmachwasser angeschlossen sind, wobei die Zufuhrleitung für Anmachwasser mit einer Kohlendioxideinspeisevorrichtung zum Einspeisen von Kohlendioxid in das Anmachwasser und einer Hochdruckpumpe zur Erhöhung des Drucks des Anmachwassers versehen ist.

Spritzbeton wird häufig als erste Sicherungsmaßnahme und als Endausbau im Tunnel-oder Stollenbau und für Baugrubenwände eingesetzt. In Abhängigkeit vom Ort, an dem die Komponenten des Spritzbetons zusammengemischt werden, unterscheidet man zwischen Nass-, Feucht- und Trockenspritzverfahren. Beim Trockenspritzverfahren wird Zement, gegebenenfalls gemischt mit trockenen Zuschlagstoffen und Abbindebeschleunigem, von der Spritzmaschine mit Druckluft zur Spritzdüse gefördert. Als Feuchtspritzverfahren bezeichnet man Verfahren, bei denen feuchte Zuschlagstoffe zugegeben werden. Beim Verlassen der Spritzdüse wird der Zement bzw. das Gemisch aus Zement und Zuschlagstoffen und Abbindebeschleunigern mit Anmachwasser benetzt und auf den zu bearbeitenden Untergrund gestrahlt. Beim Nassspritzverfahren erfolgt dagegen das Mischen des Zements und des Zuschlagstoffes mit dem Anmachwasser vor der Spritzdüse. Dieses Gemisch wird mittels einer Pumpe zur Düse gefördert und dann zum Verspritzen mittels Druckluft an der Düse beschleunigt.

Im Vergleich zu anderen Betonarten muss Spritzbeton besonders schnell erstarren und rasch an Festigkeit zunehmen, damit die aufgespritzten Spritzbetonschichten nicht aufgrund ihres Eigengewichts von dem Objekt herunterfallen. Im Tunnelbau müssen die Spritzbetonschichten auch bereits nach relativ kurzer Zeit Erschütterungen von Sprengungen widerstehen können. Es sind bereits zahlreiche Verfahren bekannt, um die Erstarrung von Beton durch verschiedenste chemische Zusätze zu beschleunigen. Weiterhin wird in der DE 100 26 022 A1 vorgeschlagen, dem Spritzbeton Kohlendioxid zuzusetzen, um die Erstarrungszeit zu verkürzen. Das Kohlendioxid wird dabei beispielsweise dem Anmach- oder Zugabewasser zugegeben.

Beim Trockenspritzverfahren wird der Druck des Anmachwassers vor dem Eintritt in die Spritzdüse mittels einer Hochdruckpumpe teilweise bis auf 100 bar erhöht. Durch den erhöhten Wasserdruck wird während der Zerstäubung die Benetzung des trockenen Zements in der Spritzdüse verbessert und die Staubbildung beim Spritzen des Betons reduziert.

Zur Verkürzung der Erstarrungszeit des Spritzbetons kann auch bei diesem Verfahren, wie in der DE 100 26 022 A1 beschrieben, dem Anmachwasser Kohlendioxid zugesetzt werden. Das Anmachwasser wird häufig konventionellen Wasserversorgungssystemen, beispielsweise dem örtlichen Wasserleitungsnetz, entnommen und steht mit einem Druck von zum Beispiel 5 bar zur Verfügung. Wird das Anmachwasser in der Folge karbonisiert, das heißt, mit Kohlendioxid versetzt, so wird bei diesem Wasserdruck die Sättigungsgrenze bereits bei relativ kleinen Mengen von Kohlendioxid erreicht. Bei größeren Kohlendioxidzugaben kann nicht mehr das gesamte Kohlendioxid in dem Wasser gelöst werden. Um dennoch schnelle Erstarrungszeiten des Spritzbetons zu erreichen, müssen daher dem Anmachwasser oder dem Zement-Zuschlag-Gemisch noch chemische Erstarrungsbeschleuniger in erheblichen Mengen zugegeben werden.

Die in Wasser lösbare Kohlendioxidmenge steigt mit dem Wasserdruck an, das heißt, je höher der Druck des Anmachwassers ist, desto mehr Kohlendioxid kann in dem Anmachwasser gelöst werden. Insofern wäre die Zugabe von Kohlendioxid stromabwärts der Hochdruckpumpe günstig. Der Druck des Anmachwassers beträgt an dieser Stelle aber teilweise 80 bar oder mehr, wodurch sich die Einspeisung des Kohlendioxids technisch aufwändig gestaltet.

Aufgabe vorliegender Erfindung ist es daher, ein Verfahren und eine Vorrichtung der eingangs genannten Art bereitzustellen, bei dem dem Anmachwasser auf eine technisch einfach zu realisierende Art eine möglichst große Menge an Kohlendioxid zugesetzt wird.

Diese Aufgabe wird durch ein Verfahren zum Trocken- oder Feuchtspritzen eines zementhaltigen Stoffes, insbesondere von Spritzbeton gelöst, wobei Zement und Anmachwasser einer Spritzdüse zugeführt und gemischt werden und der entstehende Spritzbeton verspritzt wird. Der Druck des Anmachwassers wird zunächst auf einen Zwischendruck erhöht, dann wird dem Anmachwasser Kohlendioxid zugesetzt und schließlich wird der Druck des Anmachwassers stromaufwärts der Spritzdüse wie bisher mittels einer Hochdruckpumpe auf den Enddruck erhöht.

Die erfindungsgemäße Vorrichtung zum Trockenspritzen eines zementhaltigen Stoffes, insbesondere von Spritzbeton, mit einer Spritzdüse, an die eine Zufuhreinrichtung für Zement und Zuschlagstoffe und eine Zufuhrleitung für Anmachwasser angeschlossen sind, wobei die Zufuhrleitung für Anmachwasser mit einer Kohlendioxideinspeisevorrichtung zum Einspeisen von Kohlendioxid in das Anmachwasser und einer Hochdruckpumpe zur Erhöhung des Drucks des Anmachwassers versehen ist, zeichnet sich dadurch aus, dass stromaufwärts der Kohlendioxideinspeisevorrichtung eine Druckerhöhungsvorrichtung zur Erhöhung des Drucks des Anmachwassers vorgesehen ist.

Es wurde festgestellt, dass bei der Verwendung von Anmachwasser aus einem konventionellen Wasserversorgungssystem, beispielsweise aus dem örtlichen Wasserleitungsnetz, aufgrund des niedrigen Wasserdrucks nur geringe Mengen Kohlendioxid in dem Anmachwasser gelöst werden können, so dass sich ohne Zugabe weiterer Erstarrungsbeschleuniger keine wesentliche Beschleunigung der Erstarrungszeit des Spritzbetons erzielen lässt. Andererseits ist die Einspeisung von Kohlendioxid in das Anmachwasser stromabwärts der Hochdruckpumpe technisch schwierig und erfordert eine zusätzliche Pumpe oder einen Kompressor, um das Kohlendioxid auf den erforderlichen hohen Druck zu bringen.

Im Rahmen der Erfindung hat es sich als vorteilhaft erwiesen, das Anmachwasser zunächst auf einen Zwischendruck zu verdichten, dem Anmachwasser das Kohlendioxid bei diesem Zwischendruck zuzusetzen und dann das mit Kohlendioxid versetzte Anmachwasser auf den Enddruck zu bringen, der zum Mischen mit dem Zement und gegebenenfalls den Zuschlagstoffen und zum anschließenden Verspritzen nötig ist. Gegenüber einer Einspeisung des Kohlendioxids in das Anmachwasser unter dessen Ausgangsdruck wird eine deutliche Verbesserung des Karbonisierungsgrades, das heißt, der in dem Wasser gelösten Menge an Kohlendioxid, erreicht. Die Erstarrungszeit wird wesentlich verkürzt.

Es ist weiterhin von Vorteil, dem Zement oder vorzugsweise dem Anmachwasser Zuschlagstoffe zuzusetzen. Hierbei kommen insbesondere Beschleuniger in flüssiger oder fester Form in Betracht. Auch Sand, Kies, Schlacke, Flugasche und /oder synthetische Stoffe können als Zuschlagstoffe zugegeben werden.

Kommerziell in Gasflaschen oder Flaschenbündeln erhältliches Kohlendioxid besitzt in der Regel einen Druck zwischen 50 und 62 bar. Vorzugsweise wird der Druck des Anmachwassers auf einen Wert zwischen 10 und 60 bar erhöht. Das Kohlendioxid kann dann direkt aus dem Speicherbehälter, beispielsweise einer Gasflasche, einem Flaschenbündel oder auch aus einem Niederdrucktank, ohne Zwischenschaltung eines Kompressors in das Anmachwasser eingespeist werden.

Die Erfindung ist insbesondere dann von Vorteil, wenn das Anmachwasser auf einen Enddruck von mehr als 30 bar, bevorzugt mehr als 50 bar, besonders bevorzugt mehr als 75 bar erhöht wird. In diesen Fällen ist nämlich eine Karbonisierung des Anmachwassers, nachdem es auf den Enddruck gebracht wurde, technisch sehr aufwändig. Die erfindungsgemäße Druckerhöhung des Anmachwassers auf einen Zwischendruck ist dagegen mit einer handelsüblichen Pumpe relativ leicht zu erreichen.

Ferner kommen die Vorteile des erfindungsgemäßen Verfahrens dann besonders zum Tragen, wenn der Ausgangsdruck des Anmachwassers 4 bis 7 bar beträgt und von diesem Wert auf den Zwischendruck erhöht wird. Ohne die erfindungsgemäße Druckerhöhung auf einen Zwischendruck könnte vor, das heißt stromaufwärts, der Hochdruckpumpe nur wenig Kohlendioxid in dem Anmachwasser gelöst werden, da bei diesen geringen Drücken der Sättigungsgrad schnell erreicht wird. Und nach der Hochdruckpumpe, wenn das Anmachwasser auf seinen Enddruck gebracht wurde, ist mit den bereits beschriebenen technischen Schwierigkeiten zu rechnen. Dies gilt insbesondere auch dann, wenn das Anmachwasser drucklos vorliegt, beispielsweise wenn es aus einem Behälter entnommen wird.

Vorzugsweise wird das Anmachwasser auf eine Temperatur von weniger als 5°C, bevorzugt weniger als 3°C, besonders bevorzugt weniger als 2°C abgekühlt. Wird das Anmachwasser einem üblichen Wasserversorgungsnetz entnommen, so besitzt es in der Regel eine Temperatur zwischen 8 und 10°C. In einer bevorzugten Ausführungsform der Erfindung wird nun die Temperatur des Wassers zur Erhöhung der Löslichkeit von CO₂ nach der Druckerhöhung auf weniger als 5°C, bevorzugt weniger als 3°C, besonders bevorzugt weniger als 2°C abgesenkt.

Dem Anmachwasser wird mit Vorteil gasförmiges oder flüssiges Kohlendioxid zugesetzt. Hierbei hat es sich insbesondere als günstig erwiesen, flüssiges Kohlendioxid in das Anmachwasser einzuleiten.

Die Lösegeschwindigkeit, das heißt die in dem Anmachwasser auf einer bestimmten Strecke in einer bestimmten Zeit lösbare Menge Kohlendioxid, wird stark von der Durchmischung des Kohlendioxids mit dem Anmachwasser beeinflusst. Es ist daher günstig, das Anmachwasser und das Kohlendioxid in einer Mischeinrichtung zu vermischen. Dies kann zum einen durch getrennte Zuführung des Anmachwassers und des Kohlendioxids zu der Mischeinrichtung erfolgen, wobei das Anmachwasser und das Kohlendioxid in der Mischeinrichtung miteinander in Kontakt gebracht werden. Das Kohlendioxid kann dem Anmachwasser aber auch stromaufwärts der Mischeinrichtung zugegeben werden, wobei dann in der Mischeinrichtung noch nicht gelöste Kohlendioxid-Gasblasen in dem Anmachwasser gelöst werden.

Als Mischeinrichtung werden bevorzugt geeignete Strömungselemente eingesetzt, die eine Verwirbelung des Anmachwassers bewirken. Hierfür können beispielsweise Strömungselemente mit definierten Abrisskanten vorgesehen werden. Auch statische Mischer können prinzipiell verwendet werden, wobei jedoch allgemein darauf zu achten ist, dass der Druckabfall über der Mischeinrichtung möglichst gering ist.

Von Vorteil ist eine weitere Mischeinrichtung vorgesehen, welche das bereits mit Kohlendioxid versetzte Anmachwasser durchläuft. Auf diese Weise wird sichergestellt, dass das zugegebene Kohlendioxid vollständig in dem Anmachwasser gelöst ist.

Durch die erfindungsgemäße Zugabe von Kohlendioxid zum Anmachwasser kann der Anteil an Erstarrungsbeschleunigern deutlich reduziert werden. Als wesentlicher Vorteil dieses Verfahrens ist die preisgünstige Herstellung von Spritzbeton zu nennen. Daneben weist die Erfindung weitere Vorteile auf: Der Beton besitzt eine höhere Früh-und Endfestigkeit und die Emissionswerte der Stollenwasser weisen geringere Al-Werte und einen niedrigeren pH-Wert auf. Die Arbeitsbedingungen für die mit dem Spritzen des Spritzbetons befasste Spritzmannschaft werden verbessert.

## Patentansprüche

1. Verfahren zum Trocken- oder Feuchtspritzen eines zementhaltigen Stoffes, insbesondere von Spritzbeton, wobei Zement und Anmachwasser einer Spritzdüse zugeführt und gemischt werden und der entstehende Spritzbeton verspritzt wird, wobei dem Anmachwasser Kohlendioxid zugesetzt wird und der Druck des Anmachwassers stromaufwärts der Spritzdüse mittels einer Hochdruckpumpe auf einen Enddruck erhöht wird, **dadurch gekennzeichnet, dass** der Druck des Anmachwassers zunächst auf einen Zwischendruck erhöht wird, dann dem Anmachwasser das Kohlendioxid zugesetzt wird und schließlich der Druck des Anmachwassers auf den Enddruck erhöht wird.

2. Verfahren nach Anspruch 1, **dadurch gekennzeichnet, dass** das Anmachwasser auf einen Zwischendruck zwischen 10 und 20 bar erhöht wird.

3. Verfahren nach einem der Ansprüche 1 oder 2, **dadurch gekennzeichnet, dass** das Anmachwasser auf einen Enddruck von mehr als 30 bar, bevorzugt mehr als 50 bar, besonders bevorzugt mehr als 75 bar erhöht wird.

4. Verfahren nach einem der Ansprüche 1 bis 3, **dadurch gekennzeichnet, dass** der Druck des Anmachwassers von einem Wert zwischen 4 und 7 bar auf den Zwischendruck erhöht wird.

5. Verfahren nach einem der Ansprüche 1 bis 4, **dadurch gekennzeichnet, dass** dem Anmachwasser gasförmiges oder flüssiges Kohlendioxid zugesetzt wird.

6. Verfahren nach einem der Ansprüche 1 bis 5, **dadurch gekennzeichnet, dass** das Kohlendioxid dem Anmachwasser in oder unmittelbar vor einem statischen Mischer zugesetzt wird.

7. Verfahren nach einem der Ansprüche 1 bis 6, **dadurch gekennzeichnet, dass** der Spritzdüse Zuschlagstoffe in flüssiger oder fester Form zugeführt werden.

8. Verfahren nach Anspruch 7, **dadurch gekennzeichnet, dass** die Zuschlagstoffe dem Anmachwasser zugegeben werden.

9. Verfahren nach einem der Ansprüche 1 bis 8, **dadurch gekennzeichnet, dass** das Anmachwasser auf eine Temperatur von weniger als 5°C, bevorzugt weniger als 3°C, besonders bevorzugt weniger als 2°C abgekühlt wird.

10. Vorrichtung zum Trockenspritzen eines zementhaltigen Stoffes, insbesondere von Spritzbeton, mit einer Spritzdüse, an die eine Zufuhreinrichtung für Zement und eine Zufuhrleitung für Anmachwasser angeschlossen sind, wobei die Zufuhrleitung für Anmachwasser mit einer Kohlendioxideinspeisevorrichtung zum Einspeisen von Kohlendioxid in das Anmachwasser und einer Hochdruckpumpe zur Erhöhung des Drucks des Anmachwassers versehen ist, **dadurch gekennzeichnet, dass** stromaufwärts der Kohlendioxideinspeisevorrichtung eine Druckerhöhungsvorrichtung zur Erhöhung des Drucks des Anmachwassers vorgesehen ist.
